Europäisches Patentamt

European Patent Office

Office européen des brevets

(19)

(11) Veröffentlichungsnummer: **0 278 335 B1**

(12) **EUROPÄISCHE PATENTSCHRIFT**

(45) Veröffentlichungstag der Patentschrift: **04.12.91**

(51) Int. Cl.⁵: **E02B 3/02, E02F 3/88**

(21) Anmeldenummer: **88101281.9**

(22) Anmeldetag: **29.01.88**

(54) **Verfahren und Vorrichtung zum Entfernen von Schlammablagerungen aus Hafenbecken oder dgl.**

(30) Priorität: **10.02.87 DE 3704003**

(43) Veröffentlichungstag der Anmeldung:
**17.08.88 Patentblatt 88/33**

(45) Bekanntmachung des Hinweises auf die
Patenterteilung:
**04.12.91 Patentblatt 91/49**

(84) Benannte Vertragsstaaten:
**BE DE ES FR GB GR IT NL SE**

(56) Entgegenhaltungen:
**EP-A- 0 119 653**   **EP-A- 0 134 312**
**BE-A- 904 729**   **DE-A- 1 634 017**
**GB-A- 1 116 290**   **US-A- 3 964 184**
**US-A- 4 127 950**

(73) Patentinhaber: **Meyer & van der Kamp GmbH
& Co. Kommanditgesellschaft - Jadesand
Am Hafen 39
W-2930 Varel 1(DE)**

(72) Erfinder: **Meyer, Haiko
Südendergrodenweg 3
W-2930 Varel 1(DE)**

(74) Vertreter: **Goddar, Heinz J., Dr. et al
FORRESTER & BOEHMERT Widenmayerstrasse 4/I
W-8000 München 22(DE)**

**Beschreibung**

Die Erfindung betrifft ein Verfahren sowie eine Vorrichtung zum Entfernen von Schlammablagerungen aus Hafenbecken oder dergleichen nach dem Oberbegriff des Anspruchs 1 bzw. des Anspruchs 6 (BE-A-904 729).

Die BE-A-904 729 sowie die europäische Patentschrift 0 119 653 beschreiben ein Verfahren der eingangs genannten Art sowie eine entsprechende Vorrichtung zur Ausführung des Verfahrens.

Dabei werden die die Wasserstrahlen erzeugenden Düsen direkt in die Schlammschicht eingeführt.

Nachteilig ist dabei insbesondere, daß durch unvermeidliche Verwirbelungen der Schlammschicht auch über den genannten Wasserstrahldüsen nur ein sehr begrenzter Wirkungsgrad im Hinblick auf den Verflüssigungsgrad der Schlammschicht erreicht wird. Ferner können die Verwirbelungen zur Folge haben, daß die Schlammsubstanz sich auf die Düsen bzw. das die Düsen umschließende Gehäuse legt. Sie können darüber hinaus dazu führen, daß ein Abwärtssog auftritt.

Die Ablagerungen von Schlamm auf dem Düsengehäuse in Verbindung mit dem Abwärtssog können dazu führen, daß das Düsengehäuse und damit die gesamte Vorrichtung nicht mehr manövrierfähig ist. Dadurch werden umständliche Manöver zum Wiederfreilegen der Düsen erforderlich.

Bei den erwähnten Vorrichtungen bzw. dem damit auszuführenden Verfahren ist es ferner erforderlich, daß die Schlammschicht sehr hoch aufgewirbelt und danach abgewartet wird, bis sie wegen ihres im Vergleich zum umgebenden Wasser höheren spezifischen Gewichtes in eine Schicht absinkt, in der eine natürliche bzw. künstlich erzeugte Strömung für ihren Abtransport sorgen kann.

Der Erfindung liegt die Aufgabe zugrunde, ein Verfahren bzw. eine Vorrichtung der eingangs genannten Art anzugeben, bei dem bzw. der die Manövrierfähigkeit der Gesamtvorrichtung zu jedem Zeitpunkt des Betriebes gewährleistet ist und daß bzw. die effektiv ist.

Erfindungsgemäß wird die gestellte Aufgabe mit einem Verfahren nach Anspruch 1 bzw. einer Vorrichtung nach Anspruch 6 gelöst.

Vorteilhafte Ausgestaltungen der Erfindung sind Gegenstand der Unteransprüche.

Aus der US-PS 4,127,950 ist eine Vorrichtung bekannt, bei der die Schlammschicht mittels eines Rohres zur Seite befördert wird, wo sie sich dann anlagert.

Die vorliegende Erfindung beseitigt auf verblüffend einfache Weise die Nachteile des vorgenannten Verfahrens bzw. der vorgenannten Vorrichtung: Dadurch, daß die Düsen die Schlammschicht aus einer Distanz von vorzugsweise ca. 30 bis 40 cm bestrahlen und dabei in ihrem Anstellwinkel relativ zum Grund bzw. zur Schlammschicht verstellbar sind, wird der Wirkungsgrad im Hinblick auf den Verflüssigungsgrad der Schlammsubstanz erheblich verbessert. Verwirbelungen, die zur Folge haben, daß die Schlammsubstanz sich auf die Düsen legt, treten in wesentlich verringertem Maße auf.

Das Eingraben der Düsen in die Schlammschicht und die damit verbundene Manövrierungfähigkeit des Schiffes ist ausgeschlossen.

Die Düsenleistung kann erheblich gesenkt werden, da die verflüssigte Schlammsubstanz nicht mehr, wie bei herkömmlichen gattungsgemäßen Verfahren bzw. Vorrichtungen, bis zur Wasseroberfläche hochgespült werden muß, um danach wegen ihres im Vergleich zum umgebenden Wasser höheren spezifischen Gewichtes in Schichten abzusinken, in denen eine Strömung vorhanden ist. Vielmehr hat man mit Hilfe der Erfindung die Möglichkeit, durch Steuerung der erfindungsgemäß vorgesehenen saugenden Propeller bzw. Pumpen die verflüssigte Schlammsubstanz gezielt in Schichten zu spülen, in denen eine natürliche und/oder künstlich erzeugte Strömung zum Abtransport vorhanden ist.

Schließlich liegt ein erheblicher Vorteil in dem erfindungsgemäßen Verfahren bzw. der erfindungsgemäßen Vorrichtung darin, daß infolge der Verstellbarkeit des Anstellwinkels der Düsen der von den Düsen erzeugte Rückstoß zum Antrieb bzw. zum Navigieren des Schiffes genutzt werden kann, wodurch der schiffseigene Antrieb entlastet bzw. sogar zeitweise entbehrlich wird.

Weitere Merkmale und Vorteile der Erfindung ergeben sich aus der nachfolgenden Beschreibung, in der ein Ausführungsbeispiel anhand der beiliegenden Zeichnungen näher erläutert werden wird. Dabei zeigt

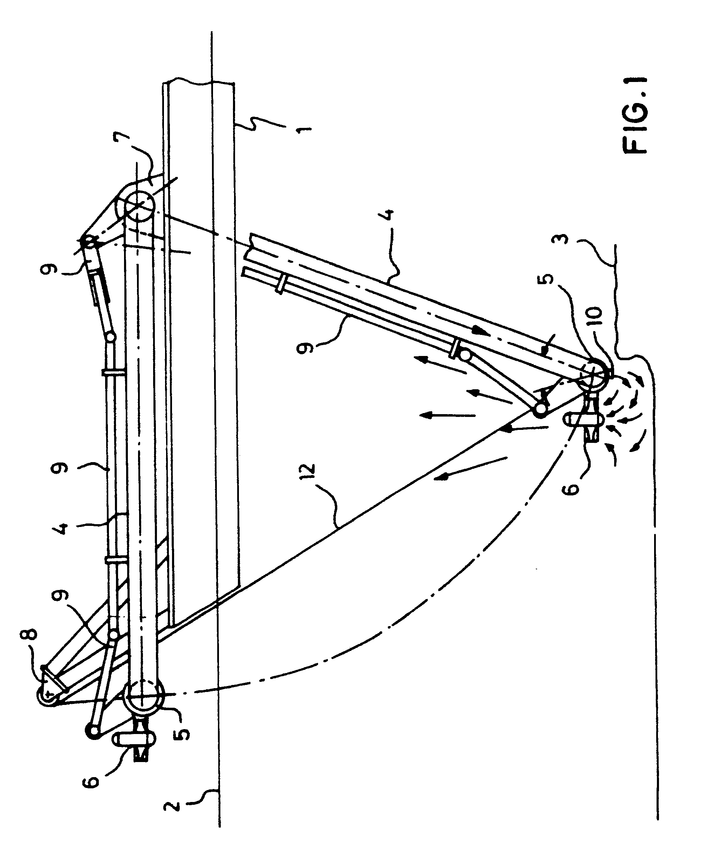

Fig. 1 eine Seitenansicht eines bevorzugten Ausführungsbeispiels der erfindungsgemäßen Vorrichtung und

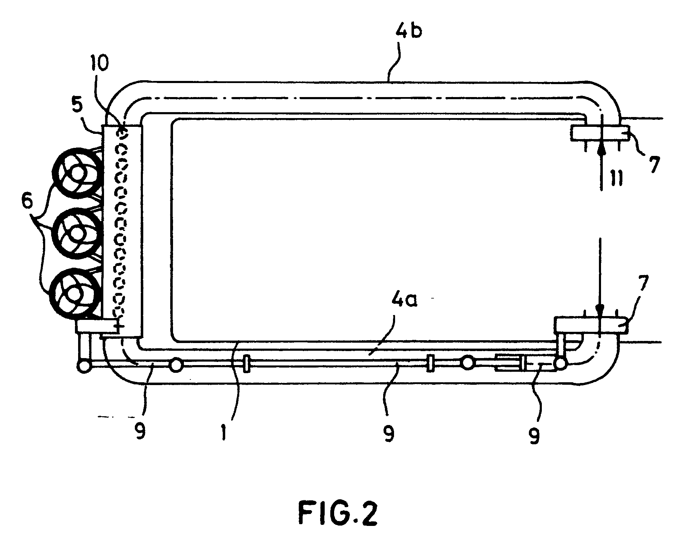

Fig. 2 eine Draufsicht auf ein bevorzugtes Ausführungsbeispiel der erfindungsgemäßen Vorrichtung.

Bezugszeichen 1 bezeichnet den Schiffskörper mit den darauf befindlichen Lagerböcken 7, an denen die Zubringerrohre 4a und 4b rechts und links des Schiffes 1 drehbar angebracht sind. Zwischen den hinteren Enden der Zubringerrohre 4a und 4b befindet sich das Querrohr 5, an dem die Düsen 10 angebracht sind. Das Querrohr 5 ist mittels des hydraulisch verstellbaren Parallelschubgestänges 9 um seine Längsachse drehbar, wodurch der Anstellwinkel der Düsen 10 relativ zum Grund bzw. zur Schlammschicht verändert werden kann. Die Höhenregulierung der Düsen 10 erfolgt über ein Seil 12, das über einen Heckgalgen mit Winde 8 läuft.

In diesem Ausführungsbeispiel sind heckseitig an dem Querrohr 5 drei Propeller 6 angebracht, die über ein weiteres Parallelschubgestänge (hier nicht gezeigt) unabhängig von der Düsenstellung in senkrecht nach oben saugender Position gehalten werden.

Beim Betrieb der Vorrichtung wird der Abstand der Düsen 10 von der Schlammschicht 3 mit einem Echolot oder dgl. (hier nicht gezeigt) gemessen und nach Maßgabe der Messung in einem Bereich von 30 bis 40 cm gehalten. Die Regulierung kann dabei manuell erfolgen; selbtverständlich ist es aber auch möglich, die Regulierung mit Hilfe eines rückgekoppelten Regelkreises zu automatisieren. Der Anstellwinkel der Düsen 10 relativ zum Grund bzw. zur Schlammschicht 3 wird während des Betriebs durch Regulierung mit Hilfe des hydraulisch verstellbaren Parallelschubgestänges 9 in Ist-Zeit optimiert. Bei geeigneter Stellung der Düsen 10 kann der von den Düsen 10 erzeugte Rückstoß zum Antreiben bzw. Manövrieren des Schiffes genutzt werden. Die Saugleistung der Propeller 6 wird während des Betriebes so gesteuert, daß die Trübe, die durch Aufwirbeln der Schlammschicht und daraufhin erfolgendes Vermischen des Schlamms mit dem umgebenden Wasser entsteht, gezielt in Schichten hochgespült wird, in denen eine natürliche und/oder künstlich erzeugte Strömung zum Abtransport vorhanden ist. Als Fließmittel 11, das in die Zubringerrohre 4 eingespeist und von den Düsen 10 gerichtet auf die Schlammschicht 3 gestrahlt wird, wird bei dem erfindungsgemäßen Verfahren Wasser, Luft oder ein Wasser-Luft-Gemisch verwandt.

## Patentansprüche

1. Verfahren zum Entfernen von schlammablagerungen aus Hafenbecken oder dgl., bei dem eine Schlammschicht (3) mit Strahlen eines Fließmittels, die von Düsen (10) erzeugt werden, welche von mindestens einem Zubringerrohr (4) gespeist werden und im wesentlichen unterhalb eines Schiffes (1) oder dgl. angebracht sind, beaufschlagt und hierdurch aufgewirbelt wird, wodurch der Schlamm sich mit dem umgebenden Wasser zu einer Trübe vermischt, die durch vorhandene natürliche und/oder künstlich erzeugte Strömung abtransportiert wird, dadurch gekennzeichnet, daß die Düsen mittels eines Regelkreises mit einem Abstandsmesser in einem Abstand von mindestens 10 cm oberhalb der Oberfläche der Schlammschicht (3) gehalten werden und daß die Trübe mittels Fördereinrichtungen (6), welche in ihrer Leistung unabhängig von den Düsen (10) einstellbar sind, gezielt in Schichten hochgespült wird, in denen eine natürliche und/oder künstlich erzeugte Strömung zum Abtransport vorhanden ist.

2. Verfahren nach Anspruch 1, dadurch gekennzeichnet, daß die Düsen (10) mit einem Abstand von ca. 30 bis 40 cm von der Oberfläche der Schlammschicht (3) gehalten werden.

3. Verfahren nach Anspruch 1 oder 2, dadurch gekennzeichnet, daß der Anstellwinkel der Düsen (10) relativ zur Oberfläche der Schlammschicht (3) eingestellt wird.

4. Verfahren nach einem der vorangehenden Ansprüche, dadurch gekennzeichnet, daß der von den Düsen (10) erzeugte Rückstoß in entsprechender Stellung als Strahlantrieb zur Navigation bzw. zum Antrieb des Schiffes (1) verwandt wird.

5. Verfahren nach einem der voranghenden Ansprüche, dadurch gekennzeichnet, daß als Fließmittel Wasser und/oder Luft verwandt wird.

6. Vorrichtung zum Entfernen von Schlammablagerungen aus Hafenbecken oder dgl., insbesondere zur Durchführung des Verfahrens nach einem der vorangehenden Ansprüche, mit im wesentlichen unterhalb eines Schiffes (1) oder dgl. angeordneten Düsen (10), die sich an einem langgestreckten Düsenrohr (5) befinden, welches an zwei parallel verlaufende Zubringerrohre (4) rechts und links vom Schiff (1) angeschlossen ist, horizontal quer zur Schiffsachse verläuft und höhenverstellbar ist, gekennzeichnet durch einen Regelkreis mit einem Abstandsmesser zum Halten der Düsen (10) während des Betriebes in einem Mindestabstand von 10 cm oberhalb der Oberfläche der Schlammschicht (3), und Fördereinrichtungen (6) in der Nachbarschaft der Düsen (10) zum Fördern der Trübe nach oben, wobei die Fördereinrichtungen (6) unabhängig von den Düsen (10) in ihrer Leistung einstellbar sind.

7. Vorrichtung nach Anspruch 6, dadurch gekennzeichnet, daß der Regelkreis den Abstand der Düsen (10) von der Oberfläche der Schlammschicht (3) auf ca. 30 bis 40 cm einstellt.

8. Vorrichtung nach Anspruch 6 oder 7, dadurch gekennzeichnet, daß die Düsen (10) durch Rotation des Düsenrohres (5) um seine Längsachse mittels eines hydraulischen Parallelschubgestänges (9) in ihrem Anstellwinkel relativ zum Grund bzw. zur Schlammschicht verstellbar sind.

9. Vorrichtung nach einem der Ansprüche 6 bis 8, dadurch gekennzeichnet, daß die Fördereinrichtungen von drei saugenden Propellern (6) gebildet sind, die mittels eines Parallelgestänges in senkrecht nach oben saugender Position gehalten werden.

10. Vorrichtung nach Anspruch 9, dadurch gekennzeichnet, daß die Propeller (6) sich an der vorderen Längsseite des Querrohres (5) befinden.

11. Vorrichtung nach Anspruch 9, dadurch gekennzeichnet, daß die Propeller (6) sich an der hinteren Längsseite des Querrohres (5) befinden.

12. Vorrichtung nach einem der Ansprüche 5 bis 10, gekennzeichnet durch ein Echolot als Abstandsmesser.

**Claims**

1. A method of removing sludge deposits from docks or the like, a sludge layer (3) being energised and fluidised by jets of a flowing agent which are produced by nozzles (10) fed by at least one supply tube (4) and disposed substantially below a ship (1) or the like, so that the sludge mixes with the surrounding water to form a turbidity which existing natural and/or artificial flow removes, characterised in that by means of a control circuit having a distance meter the nozzles are maintained at a distance of at least 10 cm above the surface of the sludge layer (3) and by means of conveyors (6) whose performance is adjustable independently of the nozzles (10) the turbidity is deliberately washed upwards in layers in which a natural and/or artificial flow for removing the turbidity is present.

2. A method according to claim 1, characterised in that the nozzles (10) are maintained at a distance of approximately 30 to 40 cm from the surface of the sludge layer (3).

3. A method according to claim 1 or 2, characterised in that the angle of attack of the nozzles (10) is adjusted relatively to the surface of the sludge layer (3).

4. A method according to any of the preceding claims, characterised in that the recoil produced by the nozzles (10) is used in an appropriate position as a jet drive to navigate or drive the ship (1).

5. A method according to any of the preceding claims, characterised in that water and/or air is used as flowing agent.

6. An apparatus for removing sludge deposits from docks or the like, more particularly for the practice of the method according to any of the previous claims, the apparatus comprising nozzles (10) which are disposed substanially below a ship (1) or the like on an elongate nozzle tube (5) connected to two parallel feed tubes (4) on the right and left of the ship (1), the nozzle tube (5) extending horizontally and transversely of the ship's axis and being vertically adjustable, characterised by a control circuit having a distance meter to retain the nozzles (10) in operation at a minimum distance of 10cm above the surface of the sludge layer (3); and conveying means (6) disposed near the nozzles (10) for upwards conveyance of the turbidity, the conveying means (6) being adjustable in their power independently of the nozzles (10).

7. An apparatus according to claim 6, characterised in that the control circuit adjusts the distance between the nozzles (10) and the sludge layer surface to approximately 30 to 40 cm.

8. An apparatus according to claim 6 or 7, characterised in that the angle of attack of the nozzles (10) relatively to the bed or the sludge layer is adjustable by rotation of the nozzle tube (5) around its longitudinal axis by means of a hydraulic parallel thrust linkage (9).

9. An apparatus according to any of claims 6 to 8, characterised in that the conveying means take the form of three suction propellers (6) maintained by means of a parallel linkage in a position in which they suck vertically upwards.

10. An apparatus according to claim 9, characterised in that the propellers (6) are disposed on the front longitudinal side of the transverse tube (5).

11. An apparatus according to claim 9, characterised in that the propellers (6) are disposed on the rear longitudinal side of the transverse tube (5).

12. An apparatus according to any of claims 5 to 10, characterised in that an echo-sounder serves as distance meter.

**Revendications**

1. Procédé pour enlever des bornes d'un bassin d'un port ou similaire dans lequel une couche de boue (3) est soumise à l'action et mise en turbulence par les jets d'un fluide de liquéfaction qui est produit par des buses (10), qui sont alimentées par au moins un tube d'amenée (4) et qui sont placées essentiellement sous un bâteau (1) ou analogue, la boue se mêlant ainsi à l'eau environnante en une eau trouble qui est évacuée par un courant existant naturellement et/ou produit artificiellement, caractérisé en ce que les buses sont maintenues au moyen d'un circuit de réglage par un appareil de mesure de distance à une distance d'au moins 10 cm au-dessus de la surface de la couche de boue (3) et en ce que l'eau trouble est balayée intentionnellement en couches vers le haut au moyen des dispositifs de transport (6) dont le débit est réglable indépendamment des buses (10), couches dans lesquelles il existe un courant naturel et/ou produit artificiellement pour l'évacuation.

2. Procédé selon la revendication 1, caractérisé en ce que les buses (10) sont maintenues espacées d'environ 30 à 40 cm de la surface de la couche de boue 3.

3. Revendication selon la revendication 1 ou 2, caractérisée en ce que l'angle d'incidence des buses (10) est réglé par rapport à la surface de la couche de boue (3).

4. Procédé selon l'une des revendications précédentes, caractérisé en ce que la poussée de recul produite par les buses (10) est utilisée en position correspondante en tant que propulsion par jets pour la navigation ou pour la propulsion du bâteau 1.

5. Revendication selon l'une des revendications précédentes, caractérisée en ce qu'on utilise comme fluide de liquéfaction de l'eau et/ou de l'air.

6. Dispositif pour enlever des bornes d'un bassin d'un port ou similaire, notamment pour la réalisation du prooédé selon l'une des revendications précédentes, comportant des buses disposées essentiellement sous un bâteau (1) ou analogue, qui se trouvent sur un tube à buses (5) s'étendant longitudinalement, qui est relié à deux tubes d'amenée (4) disposés parallèlement à droite et à gauche du bâteau (1), qui s'étend horizontalement perpendiculairement à l'axe du bâteau (1) et qui est réglable en hauteur, caractérisé par un circuit de réglage avec un appareil de mesure de distance pour le maintien des buses (10) pendant le fonctionnement à une distance minimale de 10 cm au-dessus de la surface de la couche de boue (3), et des dispositifs de transport (6) à proximité des buses (10) pour transporter l'eau trouble vers le haut, le débit des dispositifs de transport 6 pouvant être réglé indépendamment des buses (10).

7. Procédé selon la revendication 6, caractérisé en ce que le circuit de réglage règle à environ 30 à 40 cm la distance des buses (10) de la surface de la couche de boue (3).

8. Dispositif selon la revendication 6 ou 7, caractérisé en ce que l'angle d'incidence des buses 10 peut être réglé par rapport au sol ou à la couche de boue par rotation du tube de buse (5) autour de son axe longitudinal au moyen de tiges de poussées parallèles (9) hydrauliques.

9. Dispositif selon l'une des revendications 6 à 8, caractérisé en ce que les dispositifs de transport sont constitués de trois hélices (6) aspirantes qui sont maintenues au moyen de tiges parallèles dans une position perpendiculaire d'aspiration vers le haut.

10. Dispositif selon la revendication 9, caractérisé en ce que les hélices (6) se trouvent sur le côté longitudinal avant du tube transversal (5).

11. Dispositif selon la revendication 9, caractérisé en ce que les hélices se trouvent sur le côté longitudinal arrière du tube transversal (5).

12. Revendication selon l'une des revendications 5 à 10, caractérisé par un écho-sonde en tant qu' appareil de mesure de distance.

FIG.1

FIG.2